# EUROPEAN PATENT APPLICATION

(11) **EP 1 710 410 A2**
(43) Date of publication of application: **11.10.2006**
(21) Application number: 06011311.5
(22) Date of filing: 25.11.2004
(51) Int. Cl.: F01N 3/28, B01J 35/04

(54) **Metal carrier**

(30) Priority: 28.11.2003 JP 2003399384; 01.07.2004 JP 2004195606
(62) Divisional of application: 04028016.6
(71) Applicant: Calsonic Kansei Corporation, Tokyo 164-8602 (JP)
(72) Inventor: Sugimoto, Tamotsu, Nakano-ku Tokyo 164-8602 (JP); Mashiko, Seiji, Nakano-ku Tokyo 164-8602 (JP); Inoue, Katsufimi, Nakano-ku Tokyo 164-8602 (JP); Kaneda, Teruhisa, Nakano-ku Tokyo 164-8602 (JP); Tabata, Shintaro, Nakano-ku Tokyo 164-8602 (JP)
(74) Representative: Grünecker, Kinkeldey, Stockmair & Schwanhäusser Anwaltssozietät

(57) **Abstract**

A metal carrier comprising a core (3) having a thinned film containing a metal catalyst, the core comprising a first metal sheet (1A;1B) corrugated and having a plurality of crests (1a,1b,1c,1d) each having a first radius (R2,R5); and a second metal sheet (2) flattened or corrugated smaller in corrugation height than the first metal sheet, wherein the first and second metal sheets are stacked on each other and are wound up, the first metal sheet (1A,1B) has a corrugation height (H1,H3,H4) between each of said crests and a trough of the first metal sheet and a corrugation pitch (P1,P3,P4) between neighbouring crests, wherein the corrugation height is greater than the corrugation pitch.

## Description

### CROSS-REFERENCE TO RELATED APPLICATIONS

This application is based upon and claims the benefit of priorities from Japanese Patent Applications No. 2003-399384 filed on November 28, 2003 and No. 2004-195606 filed on July 1, 2004; the entire contents of which are incorporated herein by reference.

### BACKGROUND OF THE INVENTION

The present invention relates to a metal carrier for catalytic converter provided in an exhaust system of an internal combustion engine and the like.

An exhaust system for an internal combustion engine or the like is provided with a catalytic converter which cleans emissions. This kind of catalytic converter generally uses metal carrier having metal sheet such as Fe-Cr-Al based ferrite stainless foil as the catalytic converter.

To produce a metal carrier of this kind, metal sheet corrugated plates and metal sheet flat plates are alternately stacked on one another. These stacked plates are wound many times, forming a core having a honeycomb structure. The structure has a circular cross section and the like. A lower-corrugated plate having lower corrugation height than that of the corrugated plate may be used as the flat plate. Then, a brazing foil material is wound around an outer periphery of the core, it is press-fitted into a metal outer cylinder, and this is heated in a vacuum. With this heating operation, crests of the corrugated plate and the flat plate are joined to each other using diffusion joining, and the outer cylinder and the core are brazed to each other.

Catalyst such as platinum is added to the core, diffusers are welded to both ends of the outer cylinder, thereby forming a catalytic converter. In the catalyst-adding processing, wash coat solution containing catalyst is poured into the core, and a thin membrane containing the catalyst is formed on the surface of the core. See Japanese Patent Applications Laid-open Nos. 2000-61317 and No. 2003-334456.

### SUMMARY OF THE INVENTION

The metal carrier has a joint portion between the corrugated plate and the flat plate (or low-corrugated plate). The joint portion has a fillet (catalyst residue) produced from the wash coat solution under surface tension. This fillet is determined by the plate material, air (atmosphere), the surface tension of the solution and the like. The fillet is formed such as to draw an arc, and has large thickness. This prevents catalyst contained in the fillet from exhibiting the original performance, and the catalyst is waste.

It is an object of the present invention to reduce the fillet produced in a joint between a flat plate or a corrugated plate forming a core, reducing an amount of waste catalyst.

It is another object of the invention to enhance the cleaning performance.

The first aspect of the invention provides the following metal carrier. The metal carrier includes a core having a thinned film containing a metal catalyst. The core includes a first metal sheet corrugated and having a crest with a first radius. The core includes a second metal sheet flattened or corrugated smaller in corrugation height than the first metal sheet. The first and second metal sheets are stacked on each other and are wound up. The crest and second metal sheet are joined to each other, having a joint therebetween. A fillet of the catalyst is formed between the joint, the first metal sheet, and the second metal sheet, having an arced surface of a second radius extending between the first and second metal sheets. The first radius is set substantially equal to the second radius.

The first radius may be an inner radius of the crest.

The first radius may be 1.0 to 1.2 times of the second radius.

The second aspect of the invention provides the following metal carrier. The metal carrier includes a core having a thinned film containing a metal catalyst.

The core includes a first metal sheet corrugated and having a crest of a first radius. The core includes a second metal sheet flattened or corrugated smaller in corrugation height than the first metal sheet. The first and second metal sheets are stacked on each other and are wound up. The crest and second metal sheet are joined to each other, having a joint therebetween. A fillet of the catalyst is formed between the joint, the first metal sheet, and the second metal sheet, having an arced surface of a second average radius extending between the first and second metal sheets. The first radius is set to the second average radius with a standard deviation (σ) or more. The first metal sheet has a vertical wall set to be substantially normal to the second metal sheet.

The first metal sheet may have a corrugation height between a crest and a trough thereof and a corrugation pitch between neighboring crests.

The corrugation height may be greater than the corrugation pitch.

### BRIEF DESCRIPTION OF THE ACCOMPANYING DRAWINGS

Fig. 1 is an illustrative view of a method of producing a metal carrier according to a first embodiment;
Fig. 2 is a perspective view of the metal carrier of the first embodiment;
Fig. 3 is an elevation view illustrating the benefit of the first embodiment;
Fig. 4 is a partial sectional view of a metal carrier of a comparative example;
Fig. 5 is a partial sectional view of a metal carrier according to a second embodiment;
Figs. 6A and 6B are illustrative views of a concrete design example according to the second embodiment; and
Figs. 7A and 7B are illustrative views of catalyst-reduction effects obtained by a substantially normal corrugated foil vertical wall.

### DETAILED DESCRIPTION OF THE PREFERRED EMBODIMENTS

Embodiments of the present invention will be described with reference to the drawings.

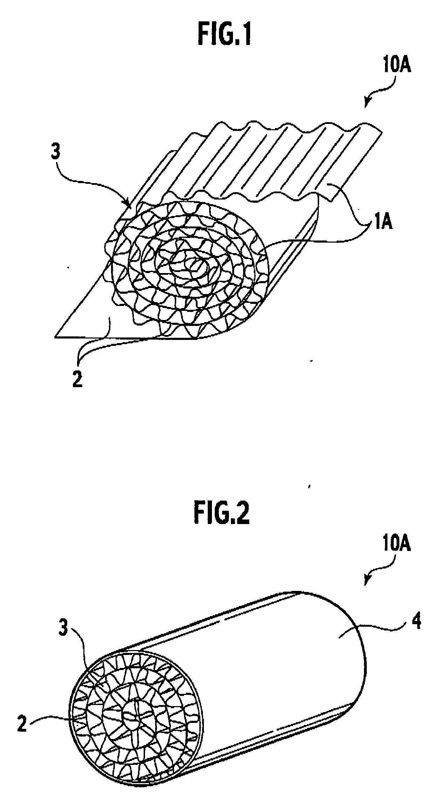

With reference to Fig. 1, a metal carrier 10A includes a corrugated plate 1A as a first metal sheet and a flat sheet 2 as a second metal sheet of a thinned metal plate in a band-shape. The corrugated plate 1A and the flat plate 2 are composed with Al of around 5%, Cu of around 20%, in addition, minute amount of metal Mn, Mo and the like, and the remains of Fe. The thickness of plate 1A or 2 is 20 to 50 µm. The corrugated plate 1A and the flat plate 2 are alternately stacked on one another, forming a layered product. The layered product is wound many times, forming a core 3 having a honeycomb structure. The honeycomb structure has a circular cross section for example. A brazing foil material wound around the outer periphery of the core 3. This is press-fitted into a metal outer cylinder 4 as shown in Fig. 2 and heated in a vacuum. With this heating operation, the corrugated plate 1A and the flat plate 2 are joined to each other using diffusion joining, and the outer cylinder 4 and the core 3 are brazed to each other for joint.

Wash coat solution containing catalyst such as platinum is poured into the core 3, forming a thin membrane containing the catalyst on the surface of the core 3. The catalyst contains a main component of alumina (Al₂O₃) with another minute amount of cerium oxide (CeO₂) or barium oxide or the like, which contains Pt, Pd, or Rh. Diffusers (not shown) are welded to both ends of the outer cylinder 4, forming a catalytic converter.

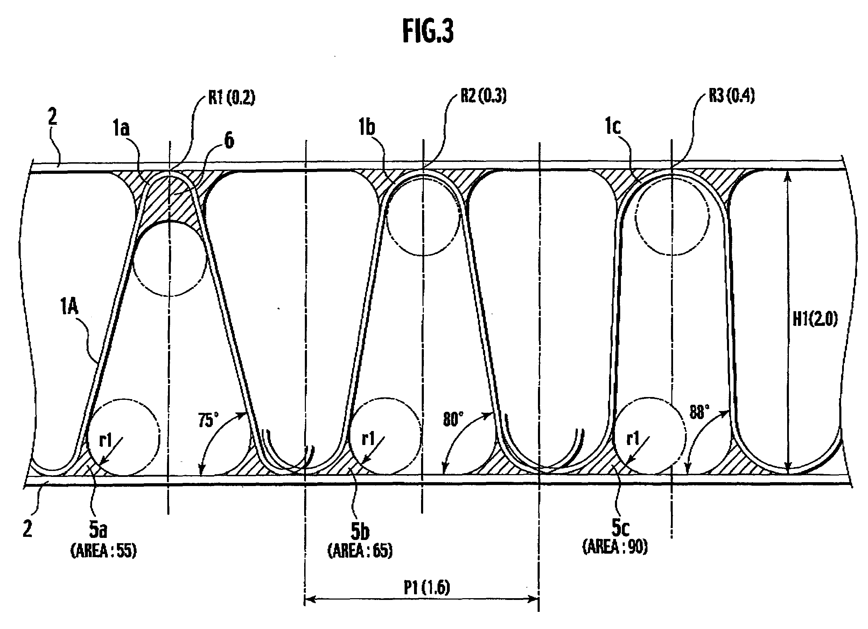

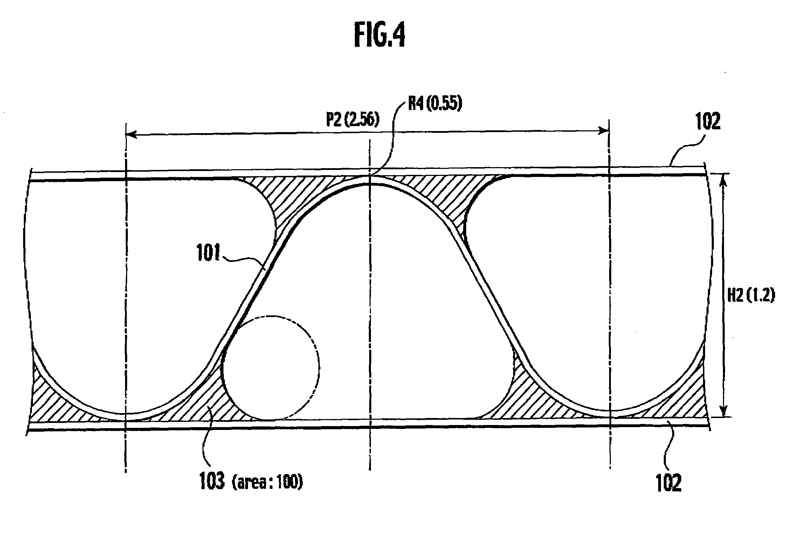

With reference to Fig. 3, the corrugated plate 1A has thickness of 30µm, corrugation height H1 of 2.0mm, and corrugation pitch P1 of 1.6mm. The corrugation height is a distance between the trough and the crest of a corrugation. The corrugation pitch is a distance between neighboring crests or between neighboring troughs of a corrugation. The corrugated plate 1A has crests 1a, 1b, and 1c whose radii R1, R2, and R3 are 0.2mm, 0.3mm, and 0.4mm, respectively. The cross section areas of fillets 5a, 5b, and 5o are 55, 65, and 90, respectively. These numeric values are comparative values when a cross section area of a fillet 103 of a comparative example shown in Fig. 4 is set to 100. The corrugated plate 101 is interposed between two flat plates 102. The corrugated plate 101 has corrugation height H2 of 1.2mm, pitch P2 of 2.56mm, and crest radius R4 of 0.55mm.

Each of the fillets 5a, 5b, and 5c has radius r1 of 0.25mm. A crest 1a having radius R1 of 0.2mm produces a catalyst residue inside the crest 1a.

The crest 1c having radius R4 of 0.4mm does not produce a catalyst residue inside of the crest 1a. The fillet 5c is greater in area than the fillet 5a having the radius R1 of 0.2mm.

The crest 1b having radius R2 of 0. 3mm produces little catalyst residue inside the crest 1b. The fillet 5b is smaller in area than the fillet 5c in correspondence with radius R3, and greater than the fillet 5a. The crest 1b reduces a total amount of waste catalyst as compared with the crests 5a and 5c of radius R1 and R3.

The radii R1, R2, and R3 are outer radii of the crests 1a, 1b, and 1c, respectively. The inner radii of the crests 1a, 1b, and 1c are smaller than the radii R1, R2, and R3. The inner radius of the crest 1a having the radius R2 is 0.27mm (-0.3mm - 0. 03mm) , which is substantially equal to the radius r1 of the arc, or arced surface, of the fillet 5b.

As this manner, the determination of inner radius of the crest 1a as a reference eliminates the influence due to the thickness of the corrugated plate 1, reducing the amount of the catalyst residue with higher accuracy.

The inner radius of the crest 1a may not be completely equal to the radius r1. The inner radius is 0.8 to 1. 2 times of the radius r1. The inner radius may be 1.0 to 1.2 times of the radius r1.

In the above embodiment, the stacked corrugated plates, flat plates, and metal carrier 10A are described. The flat plate 2 may be replaced by a lower-corrugated plate with a lower corrugation height. The lower-corrugated plate and the corrugated plate 1 may be stacked on each other to form the core, which obtains the identical benefit.

### Second Embodiment

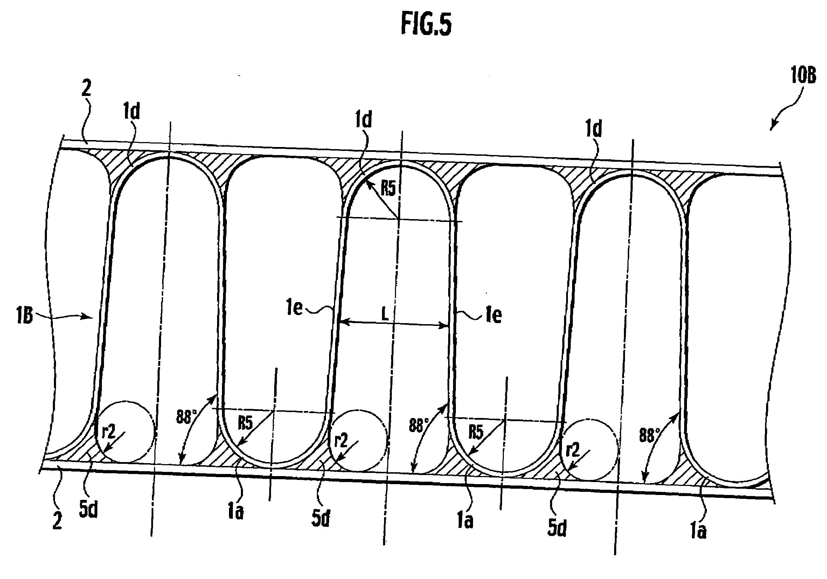

With reference to Fig. 5, a metal carrier 10B of a second embodiment will be described. The basic structure of the metal carrier 10B is identical with that of the metal carrier 10A in the first embodiment. Corrugated plate 1B and flat plate 2 of band-shaped thinned metal plates are alternately stacked on one another, forming a layered product. The layered product is wound many times, forming a core 3 having a honeycomb structure. This honeycomb structure has a rectangular cross section. Brazing foil material is wound around the outer periphery of the core 3 (see Fig. 1). This is press-fitted into a metal outer cylinder 4 and heated in a vacuum. With this heating operation, the corrugated plate 1B and the flat plate 2 are joined to each other using diffusion joining, and the outer cylinder 4 and the core 3 are brazed to each other for joint (see Fig. 2).

Wash coat solution containing catalyst such as platinum is poured into the core 3. This forms a thin membrane containing the catalyst on the surface of the core 3. Diffusers (not shown) are welded to both ends of the outer cylinder 4, forming a catalytic converter.

With reference to Fig. 5, the corrugated plate 1B has crests 1d each having radius R5. Each of the crests 1d has a fillet 5d. The arc of the fillet 5d is set equal to or greater than average radius r2 + σ (σ: standard deviation). The corrugated plate 1B has a corrugated foil vertical wall 1e. The vertical wall 1e is set to be substantially normal (for example 88°, preferably 90°) relative to the flat plate 2.

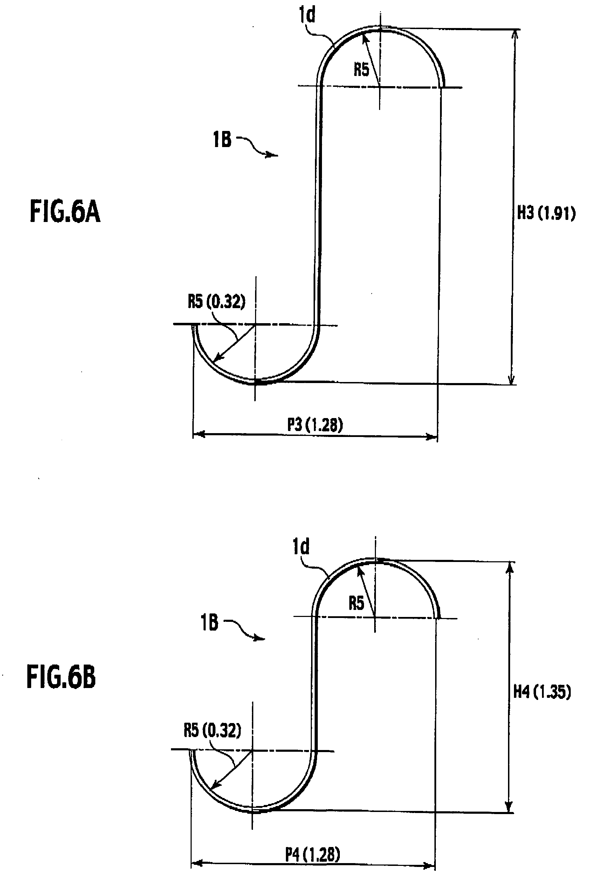

In Figs. 6A and 6B, a concrete design example of the second embodiment using the wash coat solution will be described. The fillet 5d has the arc having average value of 0.264mm and radius r2 having standard deviation of 0.024. Here, in order to reduce the production probability of filling of a catalyst into the crests 1d, radius R5 of the crest 1d is set to the average value +2.33σ of the radius r2 of the arc of the fillet 5d, e.g., to 0.32mm for example. In the design example shown in Fig. 6A, the density of a corrugated plate 1 is 600 cells, and its corrugation height H3 is 1.91mm. Corrugation pitch P3 is 1.28 mm which is two times of the radius R5. With this, the height H3 of the corrugated plate is greater than the corrugation pitch P3 thereof. In Fig. 6B, the corrugation pitch P4 is 1.28mm. The corrugation height H4 is 1.35mm. The corrugation pitch P4 and the corrugation height H4 are substantially equal to each other.

Like the first embodiment, the corrugated plate 1B produces little catalyst residue inside of the crest 1d. For example, as shown in Figs. 6A and 6B, radius R5 of 0.32mm does not produce the catalyst residue with a probability of 99%. The fillet 5d is smaller in area than the fillet 5c (see Fig. 3) with the radius R3 of 0.4mm, which reduces the total amount of waste catalyst.

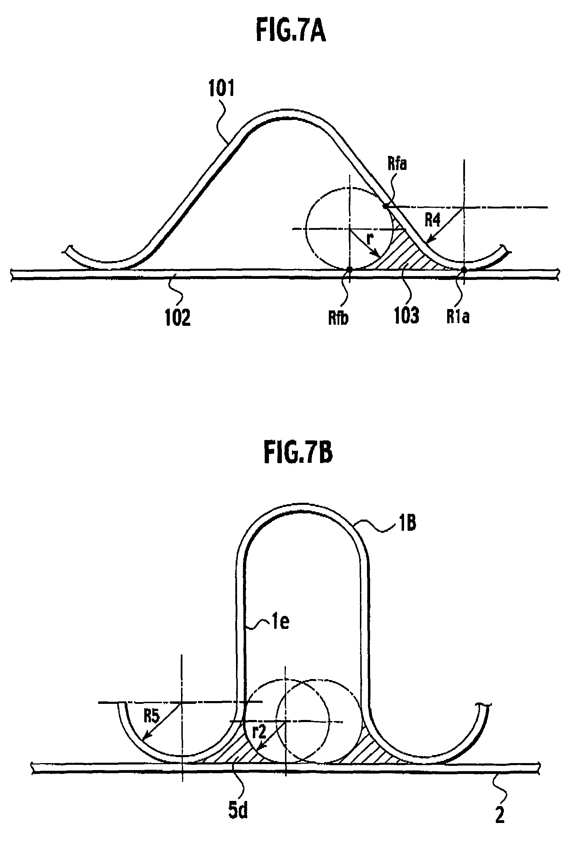

The corrugated vertical wall 1e of the corrugated plate 1B is substantially normal to the flat plate 2. With reference to Figs. 7A and 7B, the following describes a catalyst reducing effect obtained by the substantially normal corrugated vertical wall 1e. Fig. 7A shows a corrugated plate 101 of a comparative example with respect to Fig. 4, and radius r of an arc of a fillet 103 is in contact with a straight line of the corrugated plate. The fillet 103 is formed in a range surrounded by contact points Rfa, Rfb, and R1a. In Fig. 7B, the substantially normal corrugated vertical wall 1b allows an are of a fillet 5 with radius r2 and the circle of the crest 1a of the corrugated plate 1B with radius R5 to be in contact with each other. Geometrically, the area of the fillet 5d is smaller than that of the fillet 5 shown in Fig. 7A.

As described above, the radius R5 of the crest 1d of the corrugated plate 1B is slightly greater than the radius r2 of the arc of the fillet 5. The corrugated plate 1B has a corrugation-shape having a substantially normal corrugated vertical wall 1d. This configuration minimizes the waste catalyst, reducing the production costs.

While the standard deviation is 2.33 in this embodiment, in order to obtain the benefit of this embodiment, the standard deviation may be at least 1σ.

Specifically as shown in Fig. 6A, the relationship between the corrugation height H3 and the corrugation pitch P3 is H3/P3=1.5. This relationship reduces the representative length (equivalent diameter) which controls the coefficient of heat transfer by the current corrugated plate. The reduction promotes heating of the carrier, which shortens period from start of an engine to activation of the catalyst. This relation enhances the cleaning performance in a cold region. This effect enhances the cleaning performance also in the corrugation shape of the first embodiment by increasing the value of H1/P1. The embodiment with the substantially normal corrugated vertical wall 1e has the maximum H3/P3 value. This corrugation shape achieves the best cleaning performance.

As shown in Fig. 6B, in the relation of corrugation height H4>corrugation pitch P4, H4:P4 is set to about 1:1. This relationship slightly reduces the cleaning performance in a cold region, while increases cell density. This enhances the cleaning performance as a whole. Where a carrier with a corrugation height H3 of 1.91mm has 600 cells in Fig. 6A, a carrier with a corrugation height H4 of 1.35mm has 900 cells in Fig. 6B.

As described above, this embodiment provides products with a high cleaning performance and the reduced cost overall.

In this embodiment, the corrugated plate and the flat plate are stacked on each other. The flat plate may be replaced by a lower-corrugated plate that is lower in corrugation height than the corrugated plate. The lower-corrugated plate is stacked on the corrugated plate, forming the core, which provides the identical benefit.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A metal carrier comprising:
a core (3) having a thinned film containing a metal catalyst,
the core (3) comprising:
a first metal sheet (1A;1B) corrugated and having a plurality of crests (1a, 1b, 1c, 1 d) each having a first radius (R2, R5); and
a second metal sheet (2) flattened or corrugated smaller in corrugation height than the first metal sheet (1A, 1B),
wherein the first and second metal sheets (1A, 1B, 2) are stacked on each other and are wound up, the first metal sheet (1A, 1B) has a corrugation height (H1, H3, H4) between each of said crests (1a, 1b, 1c, 1d) and a trough of the first metal sheet (1A, 1B) and a corrugation pitch (P1, P3, P4) between neighboring crests (1 a, 1b, 1 c, 1 d), **characterized in that**
the corrugation height (H1, H3, H4) is greater than the corrugation pitch (P1, P3, P4).

2. A metal carrier according to claim 1, **characterized in that** the first metal sheet (1 B) has a vertical wall (1e) set to be substantially normal to the second metal sheet (2).

3. A metal carrier according to claim 2, **characterized in that** the vertical wall (1e) is at an angle from 88 degrees to 90 degrees in relation to the second metal sheet (2).

4. A metal carrier according to at least one of the claims 1 to 3, **characterized in that** the plurality of the crests (1d) and second metal sheet (2) are joined to each other, having a joints therebetween, fillets (5d) of the catalyst are formed between the joints, the first metal sheet (1B), and the second metal sheet (2), having an arced surface of a second radius (r2) extending between the first and second metal sheets (1 B, 2), and the first radius (R5) is set to an average value of the second radius (r2) of the fillets (5d) plus 1 to 2.33 σ, where σ is the standard deviation of the radii of the fillets (5d).

5. A metal carrier according to claim 1, **characterized in that** a fillet (5b) of the catalyst is formed between the joint, the first metal sheet (1A), and the second metal sheet (2), having an arced surface of a second radius (r1) extending between the first and second metal sheets (1A, 2).

6. A metal carrier according to claim 5, **characterized in that** the first radius is the outer radius (R2) of the crest (1b) and is set equal to the second radius (r1).

7. A metal carrier according to claim 5, **characterized in that** the first radius is an inner radius of the crest (1 b) and is set 1.0 to 1.2 times of the second radius (r1).
